# EUROPEAN PATENT APPLICATION

(11) **EP 4 553 734 A1**
(43) Date of publication of application: **14.05.2025**
(21) Application number: 23020494.3
(22) Date of filing: 07.11.2023
(51) Int. Cl.: G06Q 20/06, G06Q 20/34, G06Q 20/38

(54) **SECURE DIGITAL CURRENCY TRANSACTION UNIT**

(71) Applicant: Giesecke+Devrient advance52 GmbH, 81677 München (DE)
(72) Inventor: Bohn, Markus, 81677 München (DE)
(74) Representative: Giesecke+Devrient IP

(57) **Abstract**

The present invention relates to a secure digital currency transaction unit (1) of an end user of a digital currency transaction system, comprising:
- a transaction execution unit (12) executing a transaction;
- one or more digital currency data elements (15);
- one or more control data elements (10), wherein the transaction execution unit (12) checks at least one of the one or more control data elements (10) in the transaction; and
- a control data management unit (11) for managing a control data element (10). The control data management unit (11) is adapted for managing the control data element (10) exchanged with another secure digital currency transaction unit (1a, 1b).

## Description

The invention relates to a secure digital currency transaction unit of a digital currency transaction system, a method in a secure digital currency transaction unit, a control data generation service in a digital currency transaction system and to a digital currency transaction system.

Secure transaction units, such as e.g. smart cards, RFID tokens, NFC modules or Trusted execution environments in mobile devices, are typically used to ensure confidentiality and/or integrity of the data stored in the transaction unit and to ensure that the stored data are only used as defined in the transaction system.

Still today secure transaction units are often issued to an end user of the transaction system in a given configuration, are used for transactions but remain unchanged in their configuration until they are replaced after 2-4 years. However, it is well-known in the field that the transaction execution unit in the secure transaction unit and/or (optionally existing) control data for the transaction execution unit can be changed after issuance to the end user. For a system unit, such as a remote transaction unit issuer server, correspondingly predefined, usually limited, access rights and authentication keys (or certificates) could be provided in each secure transaction unit issued.

In many digital currency transaction systems a token represents a monetary value (monetary value token) and is transferred between - preferably secure - digital currency transaction units in a transaction. For example EP 3 671514 B1, WO 2020/212331 A1, WO 2021/170646 A1, WO 2023/011758 A1 and WO 2023/011761 A1 disclose different aspects of such digital currency transaction systems. A transaction limit for a monetary value in a transaction and/or a holding limit for the tokens stored in a digital currency transaction unit may exist in a digital currency transaction system. The limit may be integrated in the transaction execution unit or separately provided in control data for the transaction execution unit of the secure digital currency transaction unit.

According to an object of the invention a secure digital currency transaction unit shall be provided which improves the flexibility in the digital currency transaction system, preferably provides improved security and/or improved performance in the secure digital currency transaction unit and/or in the digital currency transaction system.

The above-identified objectives are solved with the features of the independent claims. Further advantageous embodiments are described in the dependent claims.

According to an aspect of the present invention, there is provided a secure digital currency transaction unit of an end user of a digital currency transaction system, comprising:
- a transaction execution unit executing a transaction;
- one or more digital currency data elements;
- one or more control data elements, wherein the transaction execution unit checks at least one of the one or more control data elements in the transaction; and
- a control data management unit for managing a control data element;
the control data management unit is adapted for managing the control data element exchanged with another secure digital currency transaction unit.

Contrary to the typical approach of using a dedicated system entity, the control data are exchanged between secure digital currency transaction units of the transaction system. The present approach not only provides the flexibility of managed control data as such but - as it will become apparent in the following - enables further increased flexibility, wherein additionally even the security and/or performance may be increased.

In preferred embodiments the control data element is exchanged in a transfer of the control data element. In particular in the transfer the ownership of the control data element is transferred. Preferably, a control data element of the other secure digital currency transaction unit is received in the transfer from the other secure digital currency transaction unit or a control data element of the secure digital currency transaction unit is sent in the transfer to the other secure digital currency transaction unit. Accordingly, due to the transfer the control data element is usable and/or used and/or stored in only one of the two secure digital currency transaction units. The first/sending secure digital currency transaction unit may use/uses the control data element (only) prior to the transfer and the second/receiving secure digital currency transaction unit may use/uses the control data element (only) after the transfer. In particular the exchanged control data element in the transfer is removed in the first/sending secure digital currency transaction unit and added in the second/receiving secure digital currency transaction unit. A control data element may be removed/added in a secure digital currency transaction unit by deleting/ storing it or by decreasing/increasing a parameter of a stored control data element respectively.

A transfer (exchange) of the control data element is particularly advantageous, if both secure digital currency transaction units are transaction units of the same end user and/or an end user group. The control data element may be transferable between two or more transaction units of the end user (group). For example, a holding limit of the secure digital currency transaction unit of the end user may be increased by transferring a holding control data element from the other secure digital currency transaction unit of the end user (or decreased by transferring in the other direction). In another example a specific function of a transaction execution unit should be enabled in only one (or few) of the two or more secure digital currency transaction units of an end user (group). A specific (and/or advanced and/or optional) function of a transaction execution unit may be enabled in the secure digital currency transaction unit by transferring a function control data element to the secure digital currency transaction unit. The function may be disabled in a secure digital currency transaction unit by transferring the function control data element from the secure digital currency transaction unit (to the other one).

In other embodiments the control data element is exchanged in a distribution of the control data element. This exchange in particular allowing a subsequent distribution of the control data element from the distributing secure digital currency transaction unit. Preferably, a control data element of the other secure digital currency transaction unit is received in the distribution from the other secure digital currency transaction unit or a control data element of the secure digital currency transaction unit is sent in the distribution to the other secure digital currency transaction unit. Accordingly, due to the distribution, the control data element is usable and/or used and/or stored in both secure digital currency transaction units. The first/sending secure digital currency transaction unit may use/uses the control data element (only) prior to and after the distribution and the second/receiving secure digital currency transaction unit may use/uses the control data element after the distribution. In particular the exchanged control data element in the distribution remains in the first/sending secure digital currency transaction unit and is added, in particular by additionally storing it or by replacing a stored control data element or by increasing a parameter value of a stored control data element, in the second/receiving secure digital currency transaction unit.

A distribution (exchange) of the control data element between the secure digital currency transaction units is particularly advantageous for the overall performance of the transaction system. Selected changes in the transaction execution can now be distributed faster to the secure digital currency transaction units of the system. E.g. a number of blocked transactions or delayed transactions due to the missing change could thus be reduced. Assuming for example that a maximum holding limit exists for each transaction unit of the system. It should be considered that this limit may be independent from and/or lower than the holding limit of an end user. For example, if a maximum holding limit shall be changed, a maximum holding control data element may be distributed between the digital currency transaction units.

The control data element is exchanged with the other secure digital currency transaction unit, particularly in a transfer or a distribution, which could also be named a control data transfer or a control data distribution. The control data element is stored (and/or used/usable) in the sending secure digital currency transaction unit before the exchange and in the receiving secure digital currency transaction unit after the exchange. The control data management unit adds and/or removes the exchanged control data element(s), particularly in accordance with the type of exchange, transfer or distribution, and/or with the direction of exchange, send or receive. A type of exchange, transfer exchange or distribution exchange, may be different for different control data elements.

The transaction execution unit checks the one or more control data elements particularly in order to determine, if a transaction may be executed or may not be executed in the secure digital currency transaction unit. For example, the transaction will be executed, if according to the stored control data elements a limit, such as a unit holding limit or a maximum holding limit or a transaction limit, is not exceeded and/or if the specific function to be executed in the transaction is allowed.

In the step of checking at least one (or multiple of the) control data elements of the secure digital currency transaction unit is (or are checked) by the transaction execution unit. The transaction execution unit may for example check control data elements for one or more execution criteria, e.g. one or two or more (different) limits or a function. Multiple control data elements and optionally a fixed data element (which is not exchangeable) may be checked in combination for an execution criteria. Returning to the example of a holding limit: two or more holding control data elements, e.g. monetary values L1 and L2, and optionally a fixed holding data element, e.g. monetary value L3, may be stored, wherein the sum of these data elements defines the holding limit L, e.g. L=L1+L2(+L3). The holding limit being the monetary value allowed to be held by the secure digital transaction unit. In case of a receiving transaction of monetary value A and currently held monetary value B, the transaction will be executed only, if the check arrives at the result that L >= A+B is fulfilled. In case of a sending transaction this control data element/ execution criteria may not have to be checked.

The transaction execution unit in the step of checking preferably compares a control reference with an actual value, preferably a respective property of the transaction or with a respective property of the secure digital currency transaction unit. The control reference may be included in the control data element (e.g. monetary value or transaction function name or transaction execution mode) or may be calculated based on one or more control data elements (e.g. multiple values - particularly monetary values or counter values - for the same execution criteria). In addition to transaction unit exchangeable control data elements the transaction execution unit may still check internal data of the transaction execution unit and/or fixed data elements and/or digital currency data elements. For example, a transaction limit may be pre-programmed in the transaction execution unit or stored in a fixed (not exchangeable but optionally updateable) data element of the secure digital currency transaction unit.

In preferred variants the control data element comprises a control parameter for the check, particularly as a reference for the check or for calculating the reference for the check, and preferably further comprises
- an execution criteria to be checked, particularly such as a unit limit, a unit counter, a transaction limit, a transaction function or an execution mode; and/or
- a control data type, particularly such as
   +transferable or distributable, and/or
   + consumable or static, and/or
   + identity assigned or identity generic;
   + mergeable and/or separately stored;
- an identity assignment, particularly an assigned user identifier, an assigned group identifier or an assigned account identifier; and/or
- a version information, particularly a version number or a version date, e.g. a timestamp.

The control parameter may be e.g. a value, a name or a version number. The control parameter can be directly used as the (control) reference in the step of checking (e.g. reference value is compared to actual value, reference function name is compared to actual function name). Alternatively the reference may be calculated based on one ore more control parameters from multiple control data elements) and optionally internal data of the transaction execution unit and/or a fixed data element (e.g. as above, the limit is formed by a sum). Control data elements may comprise one or more control data elements fields - such as control parameter field, execution criteria field, control data type field, identity assignment field and/or version information field. Control data elements for different execution criteria may comprise different control data elements fields and/or may differ in the number of fields. The execution criteria may be formed by a tag (e.g. of a TLV structure) or a name (e.g. "holding limit" or "function name"). The one or more control data elements may be stored (and/or exchanged) in a TLV structure (Tag/Length/Value).

The control data type may indicate one or more types of the control data element. It could be coded e.g. in a byte with one bit or two bits per type. For example, using two bits per type wherein '00' indicates unused, the eight bits '10010100' indicate a distributable control data element in the first two bits '10' ('01' would mean transferable), which is static '10' ('01' would mean consumable) according to the second two bits and identity assigned according to the third two bits '01' ('10' would mean unassigned). Properties of the exchangeable control data element, such as the property of being either transferable or distributable or properties indicated by the other types, may be implicitly linked to the execution criteria (no type field needed or type empty, e.g. '00') or explicitly included in the control data type (e.g. '01' transferable or '10' distributable). Accordingly, control data elements for different execution criteria in the secure digital currency transaction unit may include or not include a control data type.

A control data element typically will be static, i.e. will not be changed in the transaction, but could be consumable, e.g. in case of a counter being decreased upon use in the transaction. For example an offline counter, which defines a number of allowed offline transactions before going online, could be decreased in the transaction, if the transaction is an offline transaction. This property may be indicated in the control data type.

A control data element may be identity assigned, e.g. assigned to the end user or an end user group. A control data element alternatively may be identity generic (identity unassigned), i.e. not assigned to an identity. This property may also be indicated in the control data type (or not). Preferably, the control data element is transferable and identity-assigned, such as the above multiple holding permissions for a monetary value being assigned to the end-user or the single function control data element assigned to the end-user (group). Another preferred combination of properties is a control data element being distributable and identity generic.

An identity assigned control data element may include the identity assignment, preferably a user identifier, a group identifier or account identifier.

A control data element may be mergeable (and/or splitable) or not. Again this property may or may not be indicated in the control data type. A received control data element may either be stored separately, i.e. separate from already stored control data elements of the same execution criteria (not mergeable), or merged to an already stored control data element of the same execution criteria, e.g. added to a control parameter of the stored control data element. For example, the monetary value or the counter value of the received control data element may be added to the stored monetary value or counter value respectively. Accordingly, for a control data element to be sent in the exchange, the control data element either would be deleted or the control parameter of the stored control data element would be decreased (after control data element has been split).

The control data management unit may manage multiple (e.g. of the above) control data elements of the secure digital currency transaction unit.

The other secure digital currency transaction unit preferably is a secure digital currency transaction unit of the end user or of another end user. The control data element is exchanged between secure digital currency transaction units. However, it initially may have been provided to a secure digital currency transaction unit by a control data generation service, which is preferably a control data generation service of a transaction unit issuer or a control data generation service of a digital currency transaction system operator and/or digital currency issuer.

The digital currency data elements preferably comprise at least one or more of the following: one or more tokens, in particular monetary value tokens or authentication tokens; a transaction unit identifier, particularly uniquely identifying the digital currency transaction unit in the digital currency transaction system; an end user identifier, preferably uniquely identifying the end user in the digital currency transaction system; an account identifier, preferably uniquely identifying the account of the end user in the digital currency transaction system; one or more cryptographic keys (secret and/or public keys), particularly an authentication key, an encryption key and/or an identification key; one or more certificates, particularly for one of the keys and/ identifiers. The data exchanged in a transaction may include digital currency data elements and/or may be derived from digital currency data elements. For example identifiers, tokens, public keys and/or certificates may be exchanged as transaction data, whereas secret keys and/or other tokens may only be used to derive transaction data, such as a signature or an authentication. In other words, transaction data exchanged in the transaction are generated in the transaction, by incorporating or deriving digital currency data elements.

For the sake of completeness it should be mentioned that the present control data element to be exchanged between secure digital currency transaction units should not be mixed up with code of the transaction execution unit, fixed data elements (not exchanged between transaction units) or digital currency data elements (generate transaction data thus not being control data). The term control data element in the sense of the present solution excludes information integrated in the transaction execution unit and/or executable code. Digital currency data elements, e.g. in any combination of the elements listed above, are (directly or in a derived form) integrated in transaction data exchanged in the transaction and thus cannot be control data elements in the present sense. In other words, the (one or more) control data elements is only used in the step of checking and/or is (are) a transaction-unit internal control data element and/or is an exchangeable permission data element.

According to another aspect of the present invention there is provided a method in a secure digital currency transaction unit, comprising the steps:
- exchanging a control data element;
- checking the control data element in a transaction;
- depending on the result of the step of checking, executing the transaction, wherein one or more digital currency data elements are used, or not executing the transaction in the secure digital currency transaction unit.

In the present solution the control data element is intended for being exchanged between secure digital currency transaction units; and
in the step of exchanging, the control data element is exchanged with another secure digital currency transaction unit.

In preferred embodiments in the step of exchanging the control data element of a first of the two secure digital currency transaction units is transferred or distributed to a second of the two secure digital currency transaction units, wherein preferably the transferred control data element is removed (deleted or decreased) in the first secure digital currency transaction unit and added (stored or increased) in the second secure digital currency transaction unit or the distributed control data element is stored in the first and the second secure digital currency transaction unit.

The exchange, besides the substep of sending/receiving the control data element, may comprise one or more of the substeps of: authenticating at least the sending transaction unit, defining the exchange, in particular the control data element to be exchanged (preferably based on the stored control data elements and/or an end user request) and/or the exchange direction and/or the exchange type, and managing the control data element exchanged (sent/received).

As at least partly indicated already above, due to the exchange the control data element of a first (the or the other) secure digital currency transaction unit becomes a control data element of the second (the other or the respectively) secure digital currency transaction unit. The control data element preferably being checkable in a transaction of a first of the two secure digital currency transaction units before the exchange and being checkable in a transaction of a second of the two secure digital currency transaction units after the exchange. Furthermore, the control data element may only be used in the step of checking in the transaction. Preferably the control data element is a transaction-unit internal control data element and/or an exchangeable permission data element.

According to a further aspect of the present invention there is provided a control data generation service of a digital currency transaction system, comprising:
- a control data generator generating a control data element for use in a secure digital currency transaction unit, the control data element being checked in a transaction of the secure digital currency transaction unit;
- a provisioning unit providing the generated control data element to the secure digital currency transaction unit.

In the present solution the control data element is generated also for use in at least one other secure digital currency transaction unit and provided to the secure digital currency transaction unit for being exchangeable from the secure digital currency transaction unit to the at least one other secure digital currency transaction unit.

The control data may be adapted as indicated above or usable in a method as indicated above.

Finally, according to a related aspect of the present invention there is provided a digital currency transaction system, preferably a central bank digital currency transaction system, comprising: multiple secure digital currency transaction units as described above and/or configured to perform the method described above; and a control data generation unit, preferably as indicated above; and a central register, preferably a token (reference) register. Optionally the system further comprises a digital currency issuing unit.

In the following, the invention or further embodiments and advantages of the invention are explained in more detail based on drawings, wherein the drawings describe only some of the possible embodiments of the invention. At least elements drawn with dashed lines are considered as optional elements.

The drawings are not to be regarded as true to scale, and individual elements of the drawings may be shown in exaggeratedly large or exaggeratedly simplified form.
Fig. 1 shows an example of a secure digital currency transaction unit;
Fig. 2 illustrates an embodiment of a secure digital currency transaction unit;
Fig. 3 illustrates a control data element exchange in the form of a transfer;
Fig. 4 illustrates a control data element exchange in the form of a distribution;
Fig. 5 illustrates a control data element of a secure digital currency transaction unit in more detail;
Fig. 6 illustrates a first example of a control data element;
Fig. 7 illustrates a second example of a control data element;
Fig. 8 illustrates different control data elements of a secure digital currency transaction unit;
Fig. 9 illustrates multiple digital currency data elements;
Fig. 10 illustrates a digital currency transaction system including secure digital currency transaction units and system entities; and
Fig. 11 illustrates a method in a secure digital currency transaction unit.

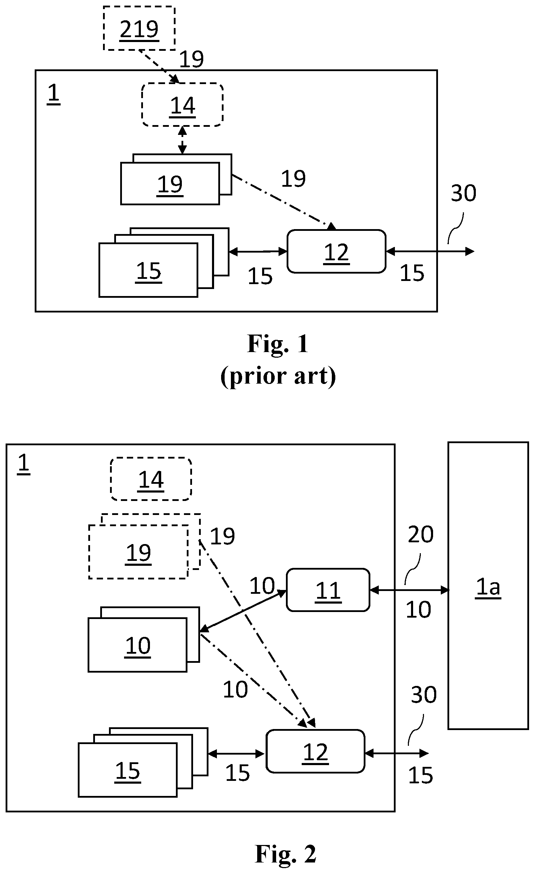

Fig. 1 shows an example of a secure digital currency transaction unit 1.

The secure digital currency transaction unit 1 comprises a transaction execution unit 12 using digital currency data elements 15 stored in the secure digital currency transaction unit 1 in a transaction 30 of the digital currency transaction system. In a step of executing the transaction 30 transaction data to be exchanged are generated. The digital currency data elements 15 may for example include an identifier, preferably an unit identifier of the secure digital currency transaction unit 1 or an account identifier. The digital currency data elements 15 may also comprise a monetary value token. Some digital currency data elements 15 may be part of the transaction data, others may be used to derive the transaction data. For example, based on a cryptographic key of the digital currency data elements 15 an authentication value may be created for the transaction 30. Alternatively, an authentication token of the digital currency data elements 15 may be added to the transaction data exchanged in the transaction 30.

The secure digital currency transaction unit 1 may include permanent (or fixed) data elements 19. The transaction execution unit 12 for the transaction 30 checks the permanent data elements 19 before executing the transaction 30. For example a transaction limit can be stored as a permanent data element 19. The transaction limit thus may be different for digital currency transaction units 1 including the same execution unit 12. The permanent data element 19 may be stored into the secure digital currency transaction unit 1 before issuance of the secure digital currency transaction unit 1 to the end user.

In an improved version the secure digital currency transaction unit 1 includes a permanent data management unit 14. The access conditions of the permanent data element 19 are set to be changeable, for example upon authentication of the transaction unit issuer. The transaction unit issuer, typically a financial service provider, issues transaction units to end users. A transaction unit issuer server 219 now may authenticate himself and request an update of the stored permanent data element 19 via the permanent data management unit 14 after issuance of the secure digital currency transaction unit 1 to the end user. Thus for example the transaction limit stored in the permanent data element 19 may be changed for a given secure digital currency transaction unit 1. Such remote update services are well-known for secure transaction units.

Fig. 2 shows a secure digital currency transaction unit 1 and another secure digital currency transaction unit 1a. The secure digital currency transaction unit 1 comprises one or more control data elements 10 and a control data management unit 11, wherein an control data element 10 is exchanged with the other secure digital currency transaction unit 1a. The control data element 10 is intended to be exchanged between secure digital currency transaction units.

The control data element 10 is checked by the transaction execution unit in the transaction 30. The control data element 10 may for example be a holding permission assigned to the end user. The holding permission or holding limit control data element indicates a monetary value which is allowed to be held in the secure digital currency transaction unit 1. The monetary value held could e.g. be the sum of monetary values of all monetary value tokens stored in the secure digital currency transaction unit 1 (or the (sum of) monetary value(s) in the account of the end user controlled by secure digital currency transaction unit 1). A receiving transaction in which a monetary value is received may not be executed by the transaction execution unit 12, since the holding limit would be exceeded. The end user now may transfer a holding limit control data element (holding permission) from his other secure digital transaction unit 1a to increase the monetary value which can be held by the secure digital currency transaction unit 1. Due to the increased holding limit the same receiving transaction after the exchange 20 of the control data element 10 is executed by the transaction execution unit 12.

The exchange 20 may comprise receiving a control data element of the secure digital currency transaction unit 1a or sending a control data element 10 of the secure digital currency transaction unit 1. The control data element 10 exchanged has been used/usable for checking in the first/sending secure digital currency transaction unit 1 or 1a before the exchange and in the second/receiving secure digital currency transaction unit 1a or 1 after the exchange. The secure digital currency transaction unit 1 is adapted to perform either an exchange 20 or a transaction 30.

The control data management unit 11 preferably stores a received control data element as a control data element 10 of the secure digital currency transaction unit 1. In case of a control data element assigned to an end user, it may verify, if the control data element 10 received is assigned to the end user of the secure digital currency transaction unit 1.

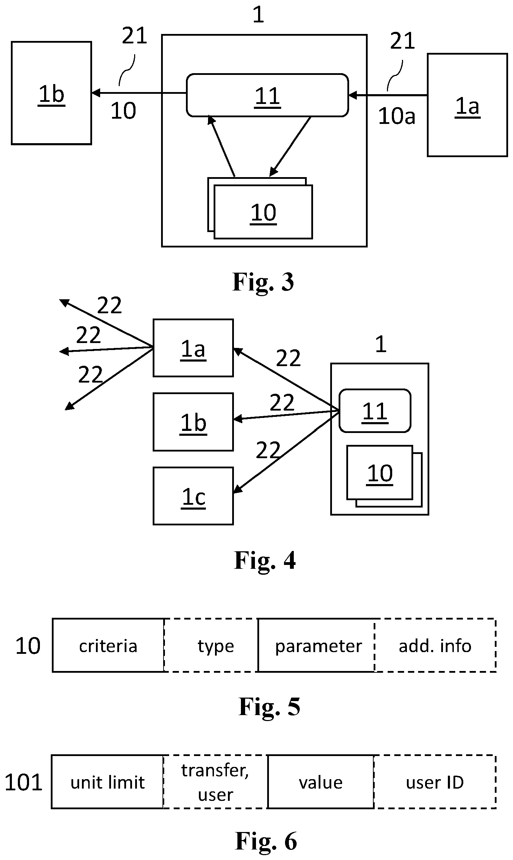

As it is explained in more detail with regard to Fig. 3 and 4, the exchange 20 of the control data element 10 between the secure digital currency transaction units may be a control data transfer 21 of the control data element 10 or a control data distribution 22 of the control data element 10.

Fig 3 shows three secure digital currency transaction units 1a, 1 and 1b. Only for the secure digital currency transaction unit 1, its control data management unit 11 and a control data element 10 are illustrated.

In a first control data transfer 21 the first secure digital currency transaction unit 1 receives a control data element 10a of the second (first other) secure digital currency transaction unit 1a. The secure digital currency transaction unit 1 adds the received control data element 10 to his control data, by either storing it as an additional control data element 10 or by increasing a control parameter in a stored control data element 10. The second secure digital currency transaction unit 1a removes the sent control data element 10a from his control data, by either deleting the control data element 10a or by decreasing a control parameter in a stored control data element. The management steps of adding and/or removing control data elements are performed by the control data management unit 11 of the respective secure digital currency transaction unit 1,1a.

In a second control data transfer 21 the first secure digital currency transaction unit 1 sends his control data element 10 to the third (second other) secure digital currency transaction unit 1b. The third secure digital currency transaction unit 1b adds the received control data element 10 to his control data, by either storing it as an additional control data element or by increasing a control parameter in a stored control data element. The first secure digital currency transaction unit 1 removes the sent control data element 10 from his control data, by either deleting the control data element 10 or by decreasing a control parameter in a stored control data element. Basically, a stored control data element 10 may be transferred completely or in part. For a partial transfer the control data element 10 is copied and adapted to include a partial value, e.g. partial monetary value or partial counter value, and the control parameter of the stored control data element 10 is decreased accordingly, e.g. for the value included in the control data element to be transferred. The management steps of adding and/or removing control data elements are performed by the control data management unit of the respective secure digital currency transaction unit 1, 1b. The control data management unit in particular decides, if a received control data element is additionally stored, replaces a stored control data element or is merged, by increasing a control parameter of a stored control data element. It further decides, if the control data element is deleted or split from a stored control data element, by decreasing a control parameter of a stored control data element accordingly.

The control data elements 10, 10a may be the same control data element or different control data elements.

In the control data transfer 21 the secure digital currency transaction unit 1a, 1 transfers his control data element 10, 10a to the other secure digital currency transaction unit 1,1b. The control data element 10, 10a is owned by/stored in/usable by only one of the digital currency transaction units 1a, 1 or 1, 1b at a time. In a transaction before the transfer 21 the control data element 10, 10a may be checked in the digital currency transaction unit 1a, 1 and in a transaction after the transfer 21 the control data element 10, 10a may be checked in the digital currency transaction unit 1,1b.

The secure digital currency transaction units 1, 1a, 1b may be transaction units of the same end user or by an end user group. In the digital currency transaction system one or more permissions may be limited per end user or end user group. For example, only one of the transaction units 1, 1a, 1b of the end user (group) in the transaction system may execute a specific function of a transaction execution unit in a digital currency transaction unit. A transferable function control data element may be initially provided to a secure digital currency transaction unit 1a of the end user (group). This function control data element then may be transferred as desired between the secure digital currency transaction units 1, 1a, 1b of the end user (group). In another example a holding limit may exist in the transaction system for an end user (group). At least one transferable holding limit control data element may be initially provided to a secure digital currency transaction unit 1a of the end user (group). Optionally, each secure digital currency transaction unit 1, 1a, 1b of the end user (group) could be initially provided with a transferable holding limit control data element. The holding limit control data element(s) then may be transferred as desired between the secure digital currency transaction units 1, 1a, 1b of the end user (group).

Fig 4 shows four secure digital currency transaction units 1, 1a, 1b and 1c. Only for the secure digital currency transaction unit 1, its control data management unit 11 and a control data element 10 are illustrated. Control data exchanges in the form of control data distributions 22 are illustrated in this figure.

The secure digital currency transaction unit 1 distributes 22 his control data element 10 to one or more secure digital currency transaction units 1a, 1b and 1c. Subsequent to a first distribution 22 of the control data element 10 from the (first) secure digital currency transaction unit 1 to another (second) secure digital currency transaction unit 1a, a subsequent (second or third ...) distribution 22 of the same control data element 10 from the (first) secure digital currency transaction unit 1 to still another (third or fourth) secure digital currency transaction unit 1b, 1c may be performed. The distributions 22 may occur at any point of time, typically after a communication between the secure digital currency transaction units is established respectively. As indicated in the figure for the secure digital currency transaction unit 1a only, the received distributable control data element may also be further distributed.

In a control data distribution 22 the first secure digital currency transaction unit 1 sends his control data element 10 to the other (second, third or fourth) secure digital currency transaction unit 1a, 1b ,1c. The other secure digital currency transaction unit 1 stores the received control data element 10. Optionally, a possibly stored control data element, which is replaced by the received control data element, could be deleted in the other secure digital currency transaction unit 1a, 1b, 1c. The first secure digital currency transaction unit 1 in a distribution 22 keeps the sent control data element 10, in particular for further distributions 22. The management steps of adding (and/or removing) control data elements are performed by the control data management unit of the respective secure digital currency transaction unit 1, 1a, 1b, 1c. Thus the control data management unit will decide how to add the received control data element, if the received control data element is additionally stored or replaces a stored control data element (e.g. in case of a new version of the control data element).

In the control data distribution 22 the secure digital currency transaction unit 1, 1a distributes his control data element to the other secure digital currency transaction unit. The control data element 10 is stored in/usable by each of the respective digital currency transaction units 1, 1a-1c. In a transaction after the distribution 22 the control data element 10 may be checked in both digital currency transaction units 1 and 1a or 1 and 1b or 1 and 1c. In a transaction before the distribution 22 the control data element 10 may be checked in the digital currency transaction unit 1 (and any transaction units 1a, 1b to which it was distributed already but not yet in the receiving currency transaction unit 1c).

An exchangeable control data element 10 will be exchanged either in control data transfers 21 or in control data distributions 22 between secure digital transaction units. The control data element 10 thus is either transferable or distributable between secure digital transaction units.

Fig. 5 shows a possible structure in the control data element(s) 10.

The control data element 10 comprises a control parameter which is used in the step of checking. The control parameter could for example be a value or a name. In the step of checking the parameter can be directly used as a control reference for a comparison. For example the value can be used as the limit for the comparison or the name can be used as the allowed name for the comparison. Alternatively, in the step of checking the parameter can be used to calculate a control reference value for the comparison. For example, the control parameter of two or more control data elements may be added and then form the control reference value. Optionally, one or more further values may be added to form the control reference value, the further value could e.g. be a constant from the transaction execution unit and/or a permanent data element 19. Typically, a property of the transaction or the secure digital transaction unit will be compared with the control reference.

The control data element 10 may comprise an execution criteria. The execution criteria may be used for distinguishing control data elements for different execution criteria (checks performed in the transaction execution unit), e.g. a first/second limit and/or first/second function. Furthermore, the control data element may optionally comprise a control data type and/or an additional info, corresponding examples will be provided in the following.

Control data elements, particularly of an execution criteria, may have a given internal structure. However, alternatively the internal structure is different for different control data elements, possibly even for the same execution criteria. The control data element may comprise data fields, e.g. two to four fields as indicated in the figure. The control data element may be coded in a TLV structure, preferably using the execution criteria as the tag or including it in a separate tag.

Fig. 6 shows an example of a control data element 101. The control data element 101 is a unit limit, preferably a holding limit control data element (or holding permission). The execution criteria checked is the holding limit, which defines an overall monetary value the secure digital currency transaction unit is allowed to hold. Thus the parameter of the control data element 101 includes a value indicating the monetary value which is permitted by storing this control data element 101. In the step of checking for a transaction the overall monetary value in the transaction unit, e.g. of all monetary value tokens stored, is compared with a control reference, which is at least partly based on the monetary value indicated in the parameter. As indicated already above, a value in a control data element 101 may form the reference value or alternatively is added to at least one further value, such as the value(s) one or more further control data element(s) for the same execution criteria and/or a constant and/or a permanent data element 19. Preferably, for the holding limit only values of control data elements (and optionally one permanent data element) are added to calculate the control reference.

The control data element 101 is a transferable control data element. This may be indicated in the control data type. Furthermore, in the example shown, the control data element is assigned to a user. This may be also indicated in the control data type. However, the control data type is still optional, since this can be a property of all holding limit control data elements in the system. A user assigned control data element is a variant of an identifier assigned control data element. Accordingly, the identifier of the end user 'user ID' is included as an additional information. An assignment to a user group identifier or an account identifier would be other variants of identifier assignments. The control data element 101 thus can be regarded as a transferable, user-assigned holding permission.

A transferable, user assigned holding limit control data element allows the end user to transfer them between his secure digital currency transaction unit. The sum of all holding limit control data elements assigned to an end user may be higher than the maximum holding limit for transaction units. Hence, the sum of the end user assigned holding limit values may be 600, although the maximum/general holding limit for digital currency transaction unit may be 400. The maximum holding limit thus in a transaction would be additionally checked by the transaction execution unit.

In a variant, the transaction system may be adapted to temporarily allow an end-user to exceed a general limit in the transaction system, for example a general holding limit of transaction units and/or the general transaction limit for transactions. A temporary over-limit control data element, which may assigned to the end-user and/or a to a transaction, can be transferred to the secure digital currency transaction unit. The control data element could be temporary by being e.g. restricted for use in a given time frame or for a given transaction (e.g. transaction id or transaction partner and value) or a single outgoing transaction. The temporary over-limit control data element could set a temporary holding limit, e.g. to 600 in the example above with general holding limit 400, for only one secure digital currency transaction unit of the end user and/or set a temporary transaction limit for only one secure digital currency transaction unit of the end user, e.g. to 600 where the general transaction limit may be 200. A general limit exceeding transaction may also be temporarily enabled by remotely updating a permanent limit data element including the general limit (e.g. permanent data element 19) for the transaction and subsequently updating the permanent limit data element back to the general limit. This approach would even be possible in the secure digital currency transaction unit of Fig. 1 (no exchangeable control data needed). However, the use of the temporary over-limit control data element is preferred, since it does not include the potential problem of intentionally blocking the subsequent update back to the general limit in the transaction system.

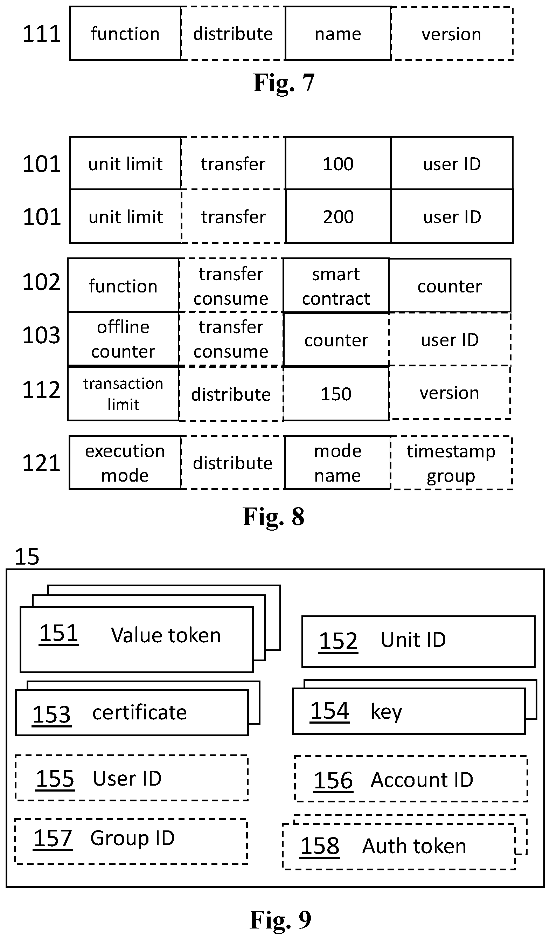

Fig. 7 shows another control data element 111. The control data element 111 can be regarded as a distributable function control data element. The control data type may (optionally) indicate the distributability of the control data element. In other variants this information may not be required (e.g. since being implicit for the execution criteria). The control data element 111 comprises the execution criteria 'function', wherein the allowed function name is given as a control parameter for the step of checking. For example, 'timestamp' or 'check-certificate-revocation' or 'smart contract' could be function names. Such functions would not be required for normal transactions in the transaction system, but may optionally be used. A transaction (the transaction execution unit) would not use the function, unless the function name to be used in the transaction and the allowed function name are identical.

Optionally a version information may be included in the control data element 111 or other control data elements. This option would for example enable the transaction system to switch the secure digital currency transaction units to a new version, e.g. of the function, by initially providing the control data element 111 to one or some secure digital currency transaction units, wherein the control data element 111 is then (automatically) distributed between secure digital currency transaction units.

Fig. 8 shows exchangeable control data of a secure digital currency transaction unit including multiple control data elements 101, 102, 103, 112, 121. Although they are shown together in order to provide a more complex example and in order to give an overview of capabilities of the control data elements, it should be noted that they could be used in other combinations or in isolation.

Control data elements 101,102 and 103 are transferable and control data elements 112,121 are distributable.

The two control data elements 101 are transferable, user assigned holding limit control data elements, which together allow the secure digital currency transaction unit to hold a monetary value of 300 (100+200). Again, in a variant this value may be used as the control reference (=300) or supplemented, e.g. by a constant minimum holding limit of 50 for each transaction unit, wherein the supplemented value forms the control reference (=350). The user may for example just have transferred the second control data element 101 in order to be able to receive an incoming monetary value of 120 in a transaction in addition to the monetary value of 150 currently held.

A control data element 102 is a transferable (and consumable) function control data element. It allows the secure digital transaction unit to execute a smart contract transaction (see function name in parameter) for a limited number of times (see counter in additional info). It can be regarded as 'consumable' since the counter will be decreased when the function is used. The control data element may be transferred completely (delete after transfer) or partly (transfer control data element with small counter value and decrease own counter value accordingly after transfer).

A control data element 103 is a transferable (and consumable) offline counter control data element. It allows the secure digital currency transaction unit to perform the number of offline transactions indicated in the counter. If the counter reaches zero the secure digital currency transaction unit has to perform an online transaction and/or send data to a central register of the transaction system, e.g. a token register. Then it may receive a new offline counter control data element.

A control data element 112 is a distributable transaction limit control data element. It defines the limit for the monetary value allowed in each transaction. Hence, in the example shown here, the secure digital currency transaction unit in a transaction may send or receive only a monetary value of 150, e.g. one or more monetary value tokens having this or a lower value. The control data element may have superseded a previously defined constant of the transaction execution unit, e.g. 100 or 200. The optional version information, e.g. a version number or date, in the control data element 112 would allow the control data management unit to decide, if a received transaction limit control data element should replace the stored control data element 112 (only newer version replaces stored older version).

Finally, a control data element 121 is a further distributable control data element. The control data element 121 enables an execution mode of the transaction execution unit to be used in the secure digital currency transaction unit. The mode name of the allowed mode is given in the parameter. The transaction execution unit may normally be executed in a normal mode, but supports at least one further mode. The execution in a further mode requires a corresponding mode control data element. A functional control data element may be used to enable/disable one selected function (of the normal mode). A mode control data element however allows to change multiple functions or aspects of the transaction execution. A possible further mode could be a security mode. A secure digital currency transaction unit or a group thereof may be outdated from a security perspective and/or object of a specific security attack. Instead of blocking the secure digital currency transaction unit(s), it (they) could be operated in the security mode, e.g. until replaced by a new transaction unit. In the security mode the transaction execution may be restricted to a minimum (few selected base functions and/or low limit(s)), e.g. restricted to outgoing and/or online transactions only. Another example of a further execution mode could be an emergency mode, in which emergency functions are enabled, such as skipping user authentication before transactions and/or a simplified transaction protocol. A final example of a further execution mode would be a test mode, which allows to test the secure digital currency transaction unit of the end user. For example, in this mode test transactions may be executed not using the digital currency data elements but test data elements and/or not changing any data previously stored in the secure digital currency transaction unit.

Optionally, the control data element 121 may be assigned to a group, preferably an end user group or a transaction unit group. In the optional additional information it is further indicated that instead of a version number also a version date, e.g. in the form of a timestamp, may be used (here or in other control data elements).

Fig. 9 shows different digital currency data elements 15, which may be stored in the digital currency transaction unit in different combinations. Some exemplary combinations only, would be: 151-154; 156+158; 151, 152, 154 and 155 or 157; 153-154, 156; 153,154,156,157.

The secure digital currency transaction unit may comprise one or more monetary value tokens 151 of the digital currency transaction system. In a transaction monetary value tokens from the digital currency transaction unit may be transferred to another digital currency transaction unit, preferably directly or alternatively via a system unit of the digital currency transaction system.

Typically the secure digital currency transaction unit comprises an identifier, for example a unit identifier 152 for uniquely identifying the unit in the transaction system. A user identifier 155 (for identifying the end user), an account identifier 156 (for identifying the account) and/or a group identifier 157 (for identifying a unit or user group) may additionally or alternatively exist.

One or more cryptographic (public and/or secret) key 154 may exist, wherein preferably separate keys for encryption, unit authentication and/or transaction authentication are provided. The keys 154 may include own secret or public keys and external public keys. One or more certificates 153 may be stored, particularly for one of the identifiers and/or one of the keys. Furthermore, authentication tokens 158 may be stored in the digital currency transaction unit. Authentication tokens are typically integrated into the transaction data, e.g. if the use of secret keys shall be avoided, and are provided by the transaction system.

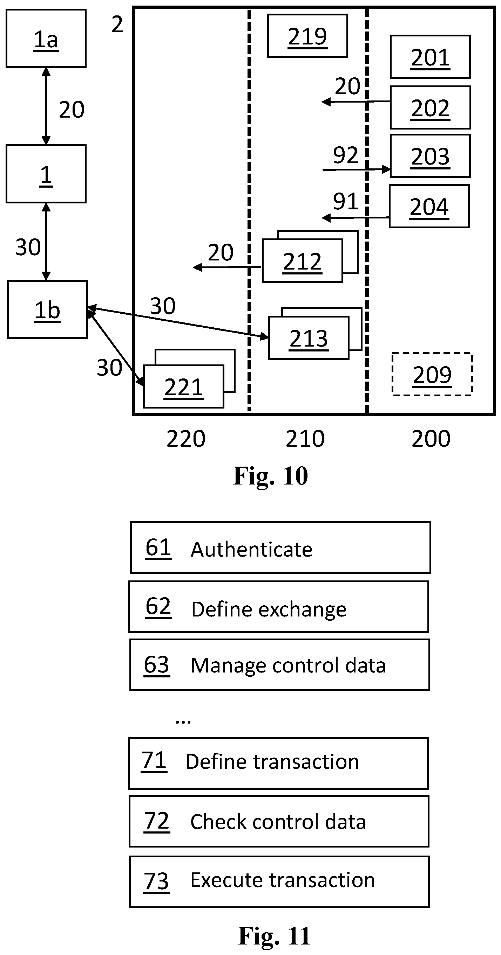

Fig. 10 shows a transaction system including secure digital currency transaction units 1, 1a and 1b and a remaining system 2. The digital currency transaction units 1 perform transactions 30 and/or perform control data exchanges 20.

A variety of different transaction systems could be used, e.g. token-based or account-based transaction systems. Examples of some different possible systems are given in EP 3 671 514 B1, WO 2020/212331 A1, WO 2021/170646 A1, WO 2023/011758 A1 and WO 2023/011761 A1. With regard to Fig. 10 thus aspects of a preferred transaction system are indicated.

The transaction system comprises a system layer 200 and optionally comprises a service provider layer 210 and/or a merchant layer 220.

The transaction system comprises a control data generating service 202, 212. A central control data generating service/server 202 could be part of the system layer 200. Alternatively or in addition one or more service providers, in particular the transaction unit issuer(s), may operate a control data generating service/server 212. The control data generating service 202, 212 generates the exchangeable control data element(s) for use in a secure digital currency transaction unit and initially provides the generated control data element(s) to the secure digital currency transaction unit for the exchange between the secure digital currency transaction units.

The transaction system may also comprises a digital currency issuing unit 204, preferably issuing the monetary value tokens. The digital currency issuing unit generates and issues 91 the digital currency, preferably digital currency (or monetary value) tokens to service providers, merchants or end users (their respective transaction units 1, 221 or 213).

The transaction system may comprise a register 203, preferably a token (reference) register. One more (token) registration requests 92 may be send to the (token) register 203 from secure digital currency transaction units 1 and/or service provider units 213, the registration request 92 preferably being a token registration replacement request. The registration of one or more registered token(s) is replaced by registration of one or more new token(s) in the register in response to the request. Token registration data may be stored in a secure digital currency transaction unit for a generated token, particularly until sent to the token register 203. Token registration data are typically generated in offline transactions and may be exchanged as a part of the token in further (offline) transactions. Examples for possible details of such token registration requests 92 including token registration data are given e.g. in WO 2020/212331 A1 or WO 2023/011756 A1.

The transaction system could include an operator service 201 provided by the transaction system operator, in particular for the merchant and/or service provide layer 210, 220. The operator service may for example provide information in regard to system or service provider units 201-209 or 212-219, in particular their respective identifier, address, public key and/or certificate.

A permanent data management server 219 and/or a transaction unit issuer server 209 may optionally be provided for remotely managing permanent data elements of secure digital currency transaction units.

A service provider unit 213 may host multiple hosted digital currency transaction units, in particular for different end users (and optionally the service provider).

Merchant terminals 221 of the merchant layer may perform transactions 30 with secure digital currency transaction units 1, 1a, 1b of the transaction system.

Fig. 11 shows possible steps 61 - 63 of a control data exchange and steps 71 -73 of a transaction. As indicated by three dots between steps 63 and 71, the exchange and the transaction can be performed independent from each other/ at any time.

In step 61 an authentication is performed. At least the control data sending secure digital currency transaction unit authenticates himself to the other (receiving) secure digital currency transaction unit. Preferably, the two secure digital currency transaction units mutually authenticate each other.

In step 62 an exchange of a control data element is defined. A secure digital currency transaction unit (or both together) define one or more control data elements to be exchanged (from the stored control data elements) and/or define the exchange direction and/or define the exchange type, transfer or distribution.

Finally, in step 63 the control data element(s) is (are) sent/received and managed, as described above in more detail. Step 63 could also be regarded as a step of executing the exchange defined. Accordingly, it includes the substeps of sending and/or receiving one or more control data elements and the respective control data management substeps of adding a received and/or removing a sent control data element.

A control data element received in an exchange 61-63 will be used in the secure digital currency transaction unit, at least if a corresponding transaction follows. For example, a holding limit will be checked if digital currency is received (incoming transaction) in the transaction, but not checked if digital currency is sent in the transaction. A generic transaction limit however would be checked for each transaction.

A transaction 71 -73 may or may not follow at any time after an exchange 61-63. For example, a transferable, received control data element may be transferred (sent) in a further transfer exchange before being used in a transaction.

In step 71 a transaction is defined in at least the secure digital currency transaction unit. Hence, a monetary value of the transaction and/or a transaction direction and/or a transaction partner and/or other transaction properties are defined. A partial or complete definition of the transaction included in a transaction request may be received by the secure digital currency transaction unit and/or generated (or completed) in the secure digital currency transaction unit. A transaction request including a partial definition may for example only include a transaction monetary value and a transaction direction. A transaction request may be received from another secure digital currency transaction unit, from an end user device, from a merchant terminal or from a system operator and/or a service provider. For example, it would not include the transaction partner (no identifier or key). Depending on the transaction system, a transaction definition may include different data elements and/or will be executed differently. For example only, the transaction may be anonym or pseudonym or identified. The transaction system may be token-based or account -based. The transaction may be a direct transaction (transaction unit to transaction unit) or an indirect transaction via the transaction system operator and/or a service provider of the transaction system.

In step 72 one or more control data element(s) is (are) checked for the transaction. This step has been described in detail above. The secure digital currency transaction unit, preferably its transaction execution unit, checks the control data element(s) in order to ensure that the transaction defined is permitted to be executed.

Finally, in step 73 the transaction is executed by the transaction execution unit. In the transaction execution e.g. the permitted function or mode of the transaction execution unit may be used and/or the permitted property of the transaction unit may be reached, e.g. unit limit or counter, and/or a transaction data having the permitted property may be generated, e.g. transaction limit. Of course, the transaction execution may include one or more substeps such as authentication, generating transaction data, sending and/or receiving transaction data, managing (store, amend or delete) one or more digital currency transaction elements. Again, the substeps and their combination depend on the transaction system. Although a monetary value token transfer is preferred and has been primarily described with regard to Fig. 10, for example the known transaction systems referenced above could be used as well.

### REFERENCE SIGNS

- 1,: secure digital currency transaction unit
- 219: transaction unit issuer server
- 12: transaction execution unit
- 14: permanent data management unit
- 15: digital currency data element
- 19: permanent data element
- 30: transaction

- 1a, 1b, 1c: secure digital currency transaction unit
- 10, 10a: control data element
- 11: control data management unit
- 20: control data exchange

- 21: control data transfer
- 22: control data distribution

- 101, 102, 103: transferable control data element
- 111, 112, 121: distributable control data element

- 151: monetary value token
- 152: transaction unit identifier
- 153: certificate
- 154: key
- 155: user identifier
- 156: account identifier
- 157: group identifier
- 158: authentication token

- 2: remaining system
- 200: system layer
- 201: operator service
- 202: control data server
- 203: register
- 204: digital currency issuance service
- 209: permanent data management service
- 210: service provider layer
- 211: provider service
- 212: control data service
- 213: hosted transaction unit
- 220: merchant layer
- 221: merchant terminal
- 91: digital currency issuance
- 92: registration request
- 61: Authenticate
- 62: Define exchange control data
- 63: Manage control data

- 71: Define transaction
- 72: Check control data
- 73: Execute transaction

## Claims

1. A secure digital currency transaction unit (1) of an end user of a digital currency transaction system, comprising:
- a transaction execution unit (12) executing a transaction;
- one or more digital currency data elements (15);
- one or more control data elements (10), wherein the transaction execution unit (12) checks at least one of the one or more control data elements (10) in the transaction; and
- a control data management unit (11) for managing a control data element (10);
**characterized in that**
the control data management unit (11) is adapted for managing the control data element (10) exchanged with another secure digital currency transaction unit (1a, 1b).

2. The secure digital currency transaction unit (1) of claim 1, **characterized in that** the control data element (10) is exchanged in a transfer (21) of the control data element (10), in particular transferring the ownership of the control data element (10), wherein preferably the control data element (10) is received in the transfer (21) from the other secure digital currency transaction unit (1a) or is sent in the transfer (21) to the other secure digital currency transaction unit (1b).

3. The secure digital currency transaction unit (1) of one of the preceding claims, **characterized in that** the control data element (10) is exchanged in a distribution (22) of the control data element (10), in particular allowing a subsequent distribution (22) of the same control data element (10) from the distributing secure digital currency transaction unit (1).

4. The secure digital currency transaction unit (1) of one of the preceding claims, **characterized in that** the transaction execution unit (12) based on the one or more control data elements checks, if a transaction may be executed or may not be executed in the secure digital currency transaction unit (1).

5. The secure digital currency transaction unit (1) of one of the preceding claims, **characterized in that** the transaction execution unit (12) compares a control reference with a respective property of the transaction or with a respective property of the secure digital currency transaction unit (1).

6. The secure digital currency transaction unit (1) of one of the preceding claims, **characterized in that** the control data element (10) comprises a control parameter for the check, and preferably further comprises
- an execution criteria to be checked, particularly such as unit limit, unit counter, transaction limit, transaction function or execution mode; and/or
- a control data type, particularly such as
+transferable or distributable,
+ consumable or static, and/or
+ identity assigned or identity generic; and/or
- an identity assignment, particularly a user identifier, a group identifier or account identifier; and/or
- a version information, particularly a version number or a version date.

7. The secure digital currency transaction unit (1) of one of the preceding claims, **characterized in that** the other secure digital currency transaction unit is a secure digital currency transaction unit of the end user or another end user.

8. The secure digital currency transaction unit (1) of one of the preceding claims, **characterized in that** the digital currency data elements (15) comprising at least one of the following:
- one or more tokens (151);
- transaction unit identifier (152);
- end user identifier (155);
- one or more cryptographic keys (154), particularly an authentication key, an encryption key and/or an identification key;
- one or more certificates (153);
- group identifier (157);
- account identifier (156);
- transaction counter.

9. The secure digital currency transaction unit (1) of one of the preceding claims, **characterized in that** at least one control data element is
- a transferable, identity assigned and optionally mergeable control data element, preferably a holding limit control data element; and/or
- a distributable, static and identity unassigned control data element, preferably a function or mode control data element.

10. A method in a secure digital currency transaction unit (1), comprising the steps:
- exchanging (61-63) a control data element (10);
- checking (72) the control data element (10) in a transaction;
- depending on the result of the step of checking (72), executing (73) the transaction, wherein one or more digital currency data elements (15) are used, or not executing the transaction in the secure digital currency transaction unit (1);
**characterized in that**
the control data element (10) is intended for being exchanged between secure digital currency transaction units (1, 1a, 1b); and
in the step of exchanging (61-63), the control data element (10) is exchanged with another secure digital currency transaction unit (1a, 1b).

11. The method according to claim 10, **characterized in that**
the control data element (10) being checkable in a transaction of a first of the two secure digital currency transaction units (1, 1a, 1b) before the exchange and being checkable in a transaction of a second of the two secure digital currency transaction units (1, 1a, 1b) after the exchange; and/or
the control data element (10) in the transaction is only used in the step of checking (72); and/or
the control data element (10) is a transaction-unit internal control data element; and/or
the control data element (10) is an exchangeable permission data element.

12. The method according to claim 10 or 11, **characterized in that** in the step of exchanging (61-63) the control data element (10) of a first of the two secure digital currency transaction units (1, 1a, 1b) is transferred or distributed to a second of the two secure digital currency transaction units (1, 1a, 1b), wherein preferably the step of exchanging (61-63) comprises:
a substep of managing (63) the exchanged control data element (10), wherein in particular the transferred control data element (10) is removed in the first secure digital currency transaction unit (1; 1a, 1b) and added in the second secure digital currency transaction unit (1a, 1b; 1) or the distributed control data element (10) remains in the first secure digital currency transaction unit (1; 1a,1b) and is stored in the second secure digital currency transaction unit (1a, 1b; 1); and/or
a substep of defining (62) the exchange; and / or
a substep of authenciating (61) at least the first of the two secure digital currency transaction units (1, 1a, 1b).

13. A control data generation service (202, 212) of a digital currency transaction system, comprising:
- a control data generator generating a control data element (10) for use in a secure digital currency transaction unit (1), the control data (10) being checked in a transaction of the secure digital currency transaction unit (1);
- a provisioning unit providing the generated control data (10) to the secure digital currency transaction unit (1);
**characterized in that**
the control data element (10) is generated for use in at least one other secure digital currency transaction unit (1a, 1b) and provided to the secure digital currency transaction unit (1) for being exchangeable from the secure digital currency transaction unit (1) to the at least one other secure digital currency transaction unit (1a, 1b).

14. The control data generation service (202, 212) **characterized in that** the control data (10) are adapted in accordance with one of claims 2 to 9 or usable according to one of claims 10 to 12.

15. A digital currency transaction system, preferably a central bank digital currency transaction system, comprising:
- multiple secure digital currency transaction units (1) according to any of claims 1 to 9 and/or configured to perform the method of any of claims 10 to 12; and
- a control data generation unit (202, 212), preferably according to claim 13 or 14; and
- a central register, preferably a token register (203);
optionally further comprising a digital currency issuing unit (204).
